# EUROPEAN PATENT APPLICATION

(11) **EP 3 082 083 A1**
(43) Date of publication of application: **19.10.2016**
(21) Application number: 16165042.9
(22) Date of filing: 13.04.2016
(51) Int. Cl.: G06Q 10/06, G06Q 10/00, G06Q 50/04

(54) **SYSTEMS AND METHODS FOR TRACKING ENGINE SYSTEM CONFIGURATIONS**

(30) Priority: 14.04.2015 US 201514686556
(71) Applicant: General Electric Company, Schenectady, NY 12345 (US)
(72) Inventor: WELCH, Lori Jean Meidenbauer, Waukesha, WI Wisconsin 53188-4961 (US); BURANT, John Michael, Waukesha, WI Wisconsin 53188-4961 (US)
(74) Representative: Foster, Christopher Michael

(57) **Abstract**

A method (52) includes retrieving (56) an engine fingerprint of engine components, wherein, for each of the engine components, the engine fingerprint includes a first identifier uniquely identifying each of the engine components. The method also includes querying (58) a plurality of the engine components configured to be disposed in an engine system. Further, the method includes determining (60) if a first engine component is a replacement component, a new component, or an originally installed component based on the engine fingerprint, the first identifier, and the query.

## Description

### BACKGROUND

The subject matter disclosed herein relates to management systems for engine systems. Specifically, the subject matter described below relates to systems and methods for tracking the installation and configuration of various components within an engine system.

Engine systems, such as reciprocating engine systems, may be used to provide power for a variety of applications, such as oil and gas processing systems, commercial and industrial building, and vehicles. However, once an engine system is commissioned into field use, information regarding the physical configuration of the engine system may not be collected. Additionally, although there are existing data capture systems that receive data from an engine control unit (ECU) installed in the engine system, the received data may not indicate whether the ECU is still running on the engine it was shipped with at the point of manufacture or if the engine has the same mechanical configuration as when the system was originally shipped.

This dearth of information about changes to the engine system may delay key maintenance operations for the engine system. For example, the lack of information may make it difficult to determine whether the engine, controller, and controller programming are desired for the intended application. In another example, the lack of information may make it difficult to calculate the lifecycle hours of a particular component, or if a component that is returned is still under warranty or belongs to a system under warranty. In yet another example, the lack of information may hinder any efforts to regularly update components, whether initiated by the customer or service personnel, as well as ensure the accuracy of data logged by an ECU, particularly for certified rebuild engine systems. In these and similar scenarios, the lack of information may cause customers, operators, and service-people to spend considerable time and effort to determine the current mechanical and operational configurations of the components of an engine system. As such, it would be beneficial to track the installation and configuration of components with an engine system, and particularly beneficial if the information was collected with minimal user input. In one embodiment, an external database may be updated during setup of the engine system, thus providing for a repository that may track various engine system components throughout the component's life cycles.

### BRIEF DESCRIPTION

Certain aspects commensurate in scope with the originally claimed invention are summarized below. These aspects are not intended to limit the scope of the claimed invention, but rather are intended only to provide a brief summary of possible forms of the invention. Indeed, the invention may encompass a variety of forms that may be similar to or different from the aspects set forth below.

In a first aspect, a system includes an engine controller having a processor. The processor is configured to retrieve an engine fingerprint of engine components, wherein, for each of the engine components, the engine fingerprint includes a first identifier uniquely identifying each of the engine components. The processor is also configured to query a plurality of the engine components configured to be disposed in an engine system. Further, the processor is configured to determine if a first engine component is a replacement component, a new component, or an originally installed component based on the engine fingerprint, the first identifier, and the query, wherein the engine controller configured to control the engine system.

In a second aspect, a method includes retrieving an engine fingerprint of engine components, wherein, for each of the engine components, the engine fingerprint includes a first identifier uniquely identifying each of the engine components. The method also includes querying a plurality of the engine components configured to be disposed in an engine system. Further, the method includes determining if a first engine component is a replacement component, a new component, or an originally installed component based on the engine fingerprint, the first identifier, and the query.

In a third aspect, a non-transitory, computer-readable medium includes executable code having instructions. The instructions are configured to retrieve an engine fingerprint of engine components, wherein, for each of the engine components, the engine fingerprint includes an identifier uniquely identifying each of the engine components. The instructions are also configured to query a plurality of the engine components configured to be disposed in a reciprocating engine system. Further, the instructions are configured to determine if a first engine component is a replacement component, a new component, or an originally installed component based on the engine fingerprint, the identifier, and the query. Additionally, the instructions are configured to update the engine fingerprint based on the determination and transmit the engine fingerprint to a database.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an engine system that may work in conjunction with an engine fingerprint system, in accordance with an embodiment of the present approach;
FIG. 2 is a block diagram of an engine control unit for the engine system of FIG. 1, in accordance with an embodiment of the present approach;
FIG. 3 is a block diagram of a data flow between the engine system and the engine fingerprint system of FIG. 1, in accordance with an embodiment of the present approach;
FIG. 4 is a flowchart illustrating a method of operation for a tracking module in the engine fingerprint system of FIG. 3, in accordance with an embodiment of the present approach; and
FIG. 5 is a flowchart illustrating an alternative method of operation for a tracking module in the engine fingerprint system of FIG. 3, in accordance with an embodiment of the present approach.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Engine systems, such as reciprocating engine systems or internal combustion engine systems, may be used for a variety of applications, such as oil and gas processing systems, commercial and industrial buildings, and vehicles. However, little information may be collected regarding the mechanical and operational configuration of the engine system after shipment to a customer. For instance, there may be minimal records indicating when a customer may move a component from one engine system to another, records indicating when the customer may remove a component the engine system, when the customer may upgrade the component, and/or when a controller for the engine system (or other programmable component) is reprogrammed for a new application (e.g., a reciprocating engine system that was previously used as part of a co-generation system but will now be used independently). A lack of information regarding the current mechanical and operational configuration of the engine system may delay maintenance operations, as customers, operators, and service-people may have to expend time and effort to collect said information before proceeding with a particular process.

To improve the accuracy of information regarding the mechanical and operational configuration of an engine system, an engine fingerprint system described herein may work cooperatively with the engine system. For example, an engine control unit (ECU) or other engine control system of the engine system may track the components of the engine system via a unique identifier assigned to each component or type of component. The ECU may then communicate with a database remote and/or local to the engine system to store a list of the components within the engine system based on the unique identifiers. In particular, the ECU may update the list stored on the database whenever a component within the engine system changes, including the ECU itself. This may include changes in the mechanical and operational configuration of a component, such as installing a component or installing a software update.

Operators, service personnel, and/or customers can then use the information stored in the database for a variety of tasks. For instance, service personnel may use the information to calculate the total lifecycle hours (e.g., run hours, fired hours) of an individual component, which may be used to resolve issues of support, warranty, and component reliability. For fleet-based analyses, service personnel may search the database for engine systems having components that qualify for the analysis, and may view information such as the current location of the engine system and the configuration of the component and the engine system. Further, in certain embodiments, information may be provided to targeted customers when upgrades become available. Overall, the engine fingerprint system described herein may decrease the amount of time and effort needed to complete maintenance tasks, and may operate with minimal user input from operators, service personnel, and/or customers.

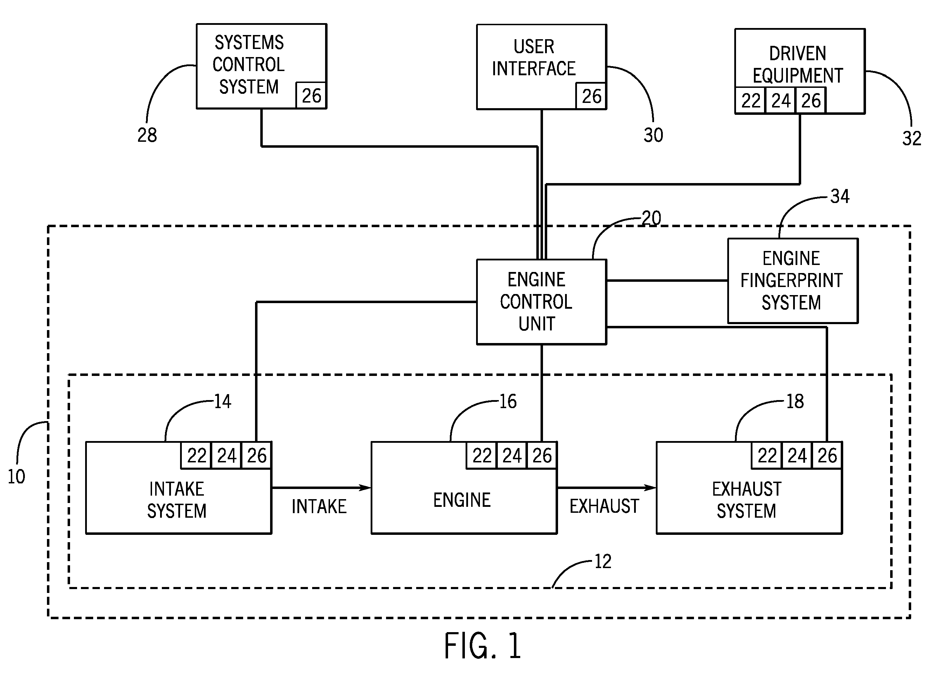

Turning now to FIG. 1, a power generation system 10 is depicted, suitable for combusting fuel to produce power for a variety of applications, such as power generation systems, oil and gas systems, commercial and industrial buildings, vehicles, landfills, and wastewater treatment. The power generation system 10 includes an engine system 12, which includes an intake system 14, an engine 16, and an exhaust system 18. The engine 16 may be, for example, a Waukesha™ engine available from the General Electric Company of Schenectady, New York. The power generation system 10 also includes an intake system 14 coupled to or disposed in the engine 16. The intake system 14 may control the amount of fuel or oxidant (e.g., air) provided to the engine 16.

The engine 16 may emit certain types and amounts of exhaust gases based on the type of fuel used. Accordingly, the exhaust system 18 may receive the exhaust gases produced by the engine 16. The exhaust system 18 may then convert the exhaust gases into other types of emissions before releasing the exhaust gases into the surrounding environment via a vent or transferring the exhaust gases to another component of the power generation system 10, such as a heat recovery system.

The power generation system 10 further includes an engine control unit (ECU) or engine control system 20, which may control the operation of the power generation system 10, which is described in further detail below. To that end, the power generation system 10 also includes sensors 22 and actuators 24 that may be used by the ECU 20 to perform various tasks. For example, as shown in FIG. 1, each component of the engine system 12 may include sensors 22 and actuators 24.

In present embodiments, each component of the power generation system 10, outside of the ECU 20, may also include a communication module 26, as shown in FIG. 1. As will be described in further detail below, the communication module 26 of a component may be responsible for communicating information regarding the status of the component to the ECU 20. In certain embodiments, the communication module 26 may also communicate with the sensors 22 and actuators 24 disposed within the component, such that the communication module 26 may also report data collected from sensors 22 and the position of an actuator 22 to the ECU 20. Additionally, although FIG. 1 depicts the communication module 26 as separate from the sensors 22 and actuators 24, it should be appreciated that in other embodiments, a sensor 20, an actuator 22, and/or a communication device 24 may form a single device having the associated combination of functionalities. The communication module 26 may use wired and/or wireless conduits to communicatively couple to the ECU 20.

In addition to controlling the engine system 12, the ECU 20 may also interact with other system interfaces for the power generation system 10. For example, the ECU 20 may also interact with a systems control system 28, a user interface 30, and driven equipment 32. The systems control system 28 may be a system that controls the overall operation of the power generation system 10 (e.g., start up and shut down, speed setpoint) in relation to other power generation systems 10 or other various other equipment and facilities. The user interface 30 may be any suitable human machine interface, such as a graphical user interface, that allows an operator to view and edit control settings, system logs, system status, faults, and so on. Although the user interface 30 is depicted as being separate from the ECU 20, it should be appreciated that in other embodiments, the user interface may be part of the ECU 20 (i.e., the ECU 20 includes a display and user interface device or system). The driven equipment 32 may be any equipment (e.g., generator, compressor) that is driven by the power generated by the engine system 12. Each of the systems control system 28, the user interface 30, and the driven equipment 32 may include a communication module 26 to interact with the ECU 20. Additionally, the driven equipment 32 may also include sensors 22 and actuators 24 that allow the ECU 20 to monitor and control the state of the driven equipment 32.

Over time, the mechanical and operational configuration of the power generation system 10 and its components may change. For example, individual components may be moved from one power generation system 10 to another power generation system 10, or may be upgraded and/or replaced. Factory certified rebuild engine systems 10 may be made from components from de-commissioned engine systems 10. Additionally, the power generation system 10 may be repurposed; for instance, the power generation system 10 that was originally part of a co-generation system may later be used as an independent power source. To monitor and track the mechanical and operational configuration of the power generation system 10, the ECU 20 may work in conjunction with an engine fingerprint system 34, as shown in FIG. 1 and described in further detail below.

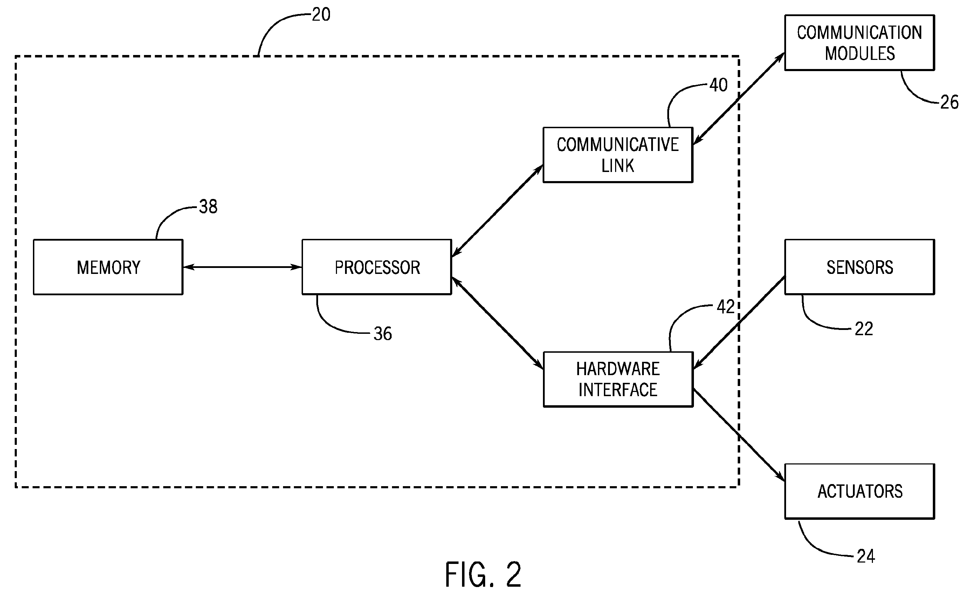

Turning now to FIG. 2, the figure is a block diagram depicting further details of the ECU 20. In the depicted embodiment, the ECU 20 includes a processor 34; a memory 38, a communicative link 40 to other systems, components, and devices, such as the communication modules 24; and a hardware interface 42 suitable for interfacing with sensors 22 and actuators 24. The processor 34 may include, for example, general-purpose single- or multi-chip processors. In addition, the processor 34 may be any conventional special-purpose processor, such as an application-specific processor or circuitry. The processor 34 and/or other data processing circuitry may be operably coupled to the memory 38 to execute instructions for running the ECU 20. These instructions may be encoded in programs that are stored in the memory 38. The memory 38 may be an example of a tangible, non-transitory computer-readable medium, and may be accessed and used to execute instructions via the processor 34.

The memory 38 may be a mass storage device (e.g., hard drive), a FLASH memory device, a removable memory, or any other non-transitory computer-readable medium. Additionally or alternatively, the instructions may be stored in an additional suitable article of manufacture that includes at least one tangible, non-transitory computer-readable medium that at least collectively stores these instructions or routines in a manner similar to the memory 38 as described above. The communicative link or conduit 40 may be a wired link or conduit (e.g., a wired telecommunication infrastructure or a local area network employing Ethernet, a controller area network [CAN] conduit, an on-board diagnostics II [ODB-II] conduit) and/or wireless link (e.g., a cellular network or an 802.11x Wi-Fi network) between the ECU 20, the communication modules 24 and other systems, components, and devices.

The sensors 22 may provide various signals to the ECU 20. For example, sensors 22 disposed within the power generation system 10 may collect data related to the temperatures, fluid flows (e.g., fuel flows, exhaust flows), pressures, clearances (e.g., distances between moving and stationary components), power production, positioning of components (e.g., camshaft position), engine vibration, and so on. The actuators 24 may include valves, pumps, positioners, inlet guide vanes, switches, and the like, useful in performing control actions.. As mentioned above, the communication modules 26 may communicate various information about the components in which they are embedded to the ECU 20. To that end, the communication modules 26 may include a processor and a communicative link similar to the processor 34 and communicative link 40 of the ECU 20.

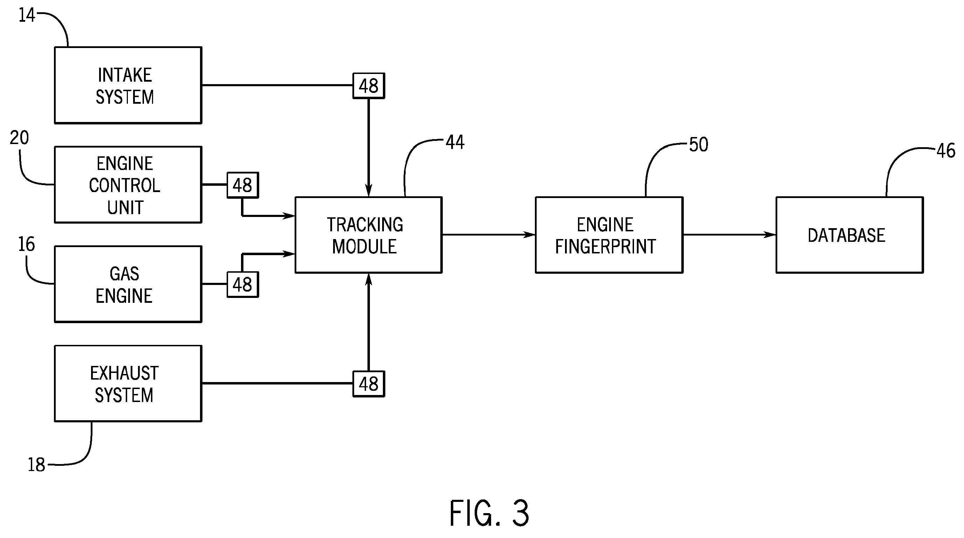

As mentioned above, the ECU 20 may work in conjunction with the engine fingerprint system 34, which may generally track the mechanical and operational configuration of a power generation system 10, thus "fingerprinting" particular power generation systems 10 and/or components. In particular, the engine fingerprint system 34 may include multiple tracking modules 44 disposed within the engine systems 10 and configured to communicatively couple to a database 44. Each tracking module 44 may be a system or device installed in the power generation system 10 and configured to communicatively couple to the components of the power generation system 10, as shown in the information flow diagram of FIG. 3. More specifically, FIG. 3 illustrates information flow suitable for creating an engine fingerprint. In the depicted embodiment, the tracking module 44 may be communicatively coupled to the communication modules 26 in each of the components. In such embodiments, the tracking module 44 may include a processor, memory, and a communicative link similar to those of the ECU 20, and may use a network separate from that used by the ECU 20. Alternatively, the tracking module 44 for a power generation system 10 may be part of the ECU 20.

The database 44 may include a memory and a communicative link to other components, systems, and devices, similar to that of the ECU 20. The database 44 may also include one or more processors suitable for executing computer instructions stored in the memory of the database 44. As will be appreciated, the database 44 may be at a location remote from the various power generation systems 10.

The tracking module 44 may be configured to record a unique identifier 48 of each component in the power generation system 10. For instance, the tracking module 44 may record unique identifiers 48 for the ECU 20, an ignition system in the engine 16, sensors 22, actuators 24, the exhaust system 18, the intake system 14, and the like. The unique identifier 48 for a component may be a serial number provided by the manufacturer of the component, a global ID (e.g., generated via universally unique identifier (UUID) techniques such as ISO/IEC 9834-8) associated with the power generation system 10, and/or a serial number assigned to the component by the tracking module 44. The unique identifier 48 may include information representing the operational configuration of the component. For example, if the unique identifier 48 of a component is a serial number, then the last three characters may represent additional information, such as the programming version of the component (e.g., ECU component), date of manufacture, place of manufacture, version information, or other product-related information. In certain embodiments, the power generation system 10 may include an identification module that contains the unique identifiers 48 for a particular group of components, such as the engine 16 and its associated crankshaft.

The list of components in the power generation system 10, the corresponding unique identifiers 48, and/or the corresponding mechanical and/or operational configurations may constitute an engine fingerprint 50 for the power generation system 10. Accordingly, the engine fingerprint 50 may uniquely identify a set of engine components being disposed in a specific power generation system 10. The engine fingerprint 50 may be gathered or determined during set up (e.g., commissioning) of the power generation system 10 and stored within the database 44 at that time. For instance, a service tool may prompt a technician installing the power generation system 10 to enter the unique identifiers 48 during set up. The tracking module 44 may then be configured to query for any changes in the engine fingerprint 50 on a set schedule and/or on start-up for the ECU 20 or the power generation system 10. In some embodiments, the components of the power generation system 10 may automatically provide their unique identifier 48 to the tracking module 44 in the same manner that they provide other types of information to the ECU 20. However, all of the methods described above allow the tracking module 44 to update the engine fingerprint 50 with minimal user input.

As mentioned above, the tracking module 44 may regularly query the components of the power generation system 10 for any changes (e.g., removals, replacements, and/or updates of engine components). Additionally, the components of the power generation system 10 may be configured to regularly update the tracking module 44. If the tracking module 44 determines that the unique identifier 48 of a component changes, then the tracking module 44 will update the engine fingerprint 50 to reflect the change in the component. In some embodiments, the tracking module 44 may also record the timestamp of the update and may also determine the lifetime hours of the component based on additional information received from the database 44. Once the tracking module determines that the mechanical and/or operational configuration of at least one component has changed, the tracking module 44 may send requests to the other components to determine any other changes in their mechanical and operational configurations. Further, the tracking module 44 may also be configured to determine whether it, or the ECU 20 containing it, has been installed on another power generation system 10. For instance, if the tracking module 44 determines that the mechanical and/or operational configuration of a majority of the components have changed (e.g., 90% of the components) then the tracking module 44 may determine that the ECU 20 or the tracking module 44 has been moved and update the engine fingerprint 50 accordingly.

Once the tracking module 44 determines the new engine fingerprint 50, it may then send the information to the database 44. In some embodiments, this action may trigger requests for updated engine fingerprints 50 from tracking modules 44 that previously transmitted certain engine fingerprints 50 that contained the components now included in the new engine fingerprint 50. Overall, the database 44 can be used to provide better remote user support and help analyze how products are used and/or maintained by operators, service personnel, and customers. For example, as mentioned above, the lifetime hours of an individual component can be tracked despite reinstallations, enabling better tracking for support, warranty, and component reliability. In another instance, customer- and service-initiated upgrades can be targeted more effectively based on the information in the database 44 regarding the current mechanical and operational configurations of various components. Further, in another example, the database 44 may be configured to record instances in which a particular component is de-commissioned, and alert an operator or service personnel if the de-commissioned component is reported as installed on a power generation system 10 according to an engine fingerprint 50.

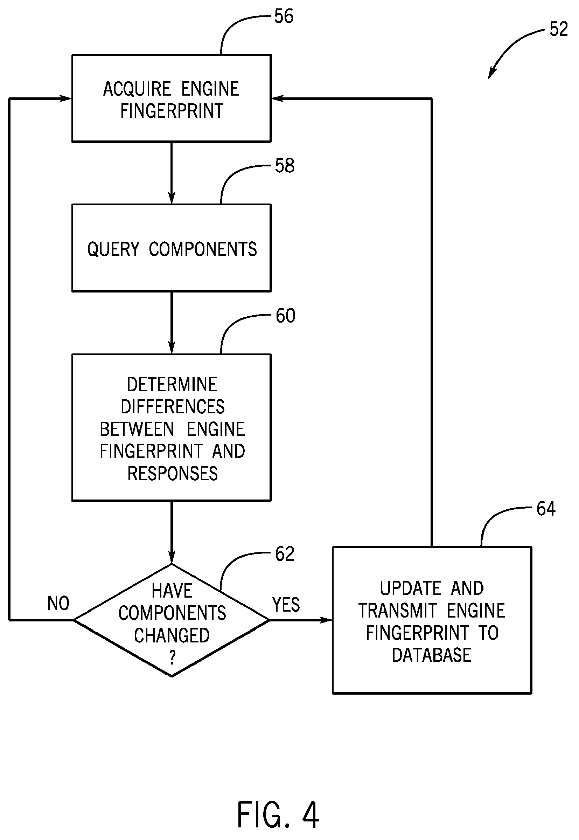

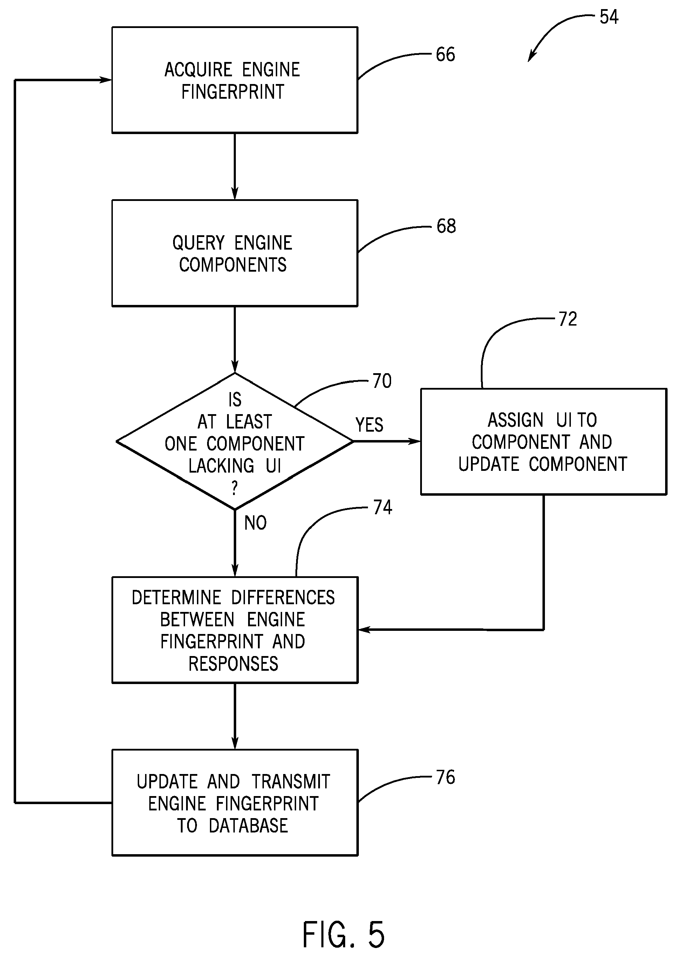

FIGS. 4 and 5 illustrate an embodiment of processes 52 and 54, respectively, suitable for execution by the tracking module 44 for creating and maintaining the engine fingerprint 50. Although the processes 52 and 54 are described below in detail, the processes 52 and 54 may include other steps not shown in FIGS. 4 and 5. Additionally, the steps illustrated may be performed concurrently or in a different order. The processes 52 and 54 may be implemented as computer instructions or executable code stored in the memory and executed by the processor of the tracking module 44, as described above.

Turning now to FIG. 4 and beginning at block 56, the tracking module 44 may create and acquire the engine fingerprint 50. The engine fingerprint 50 may be created during commissioning of a power generation system 10. For example, during commissioning, the tracking module 44 may prompt service personnel to enter and/or create a unique identifier 48 for each of the components in the power generation system 10. The engine fingerprint 50 may be stored in memory disposed within or associated with the tracking module 44, or may be retrieved from the database 44. At block 58, the tracking module 44 may then query the components of the power generation system 10 for their unique identifiers 48. As mentioned above, the tracking module 44 may query the components based on a set schedule and/or during start-up of the power generation system 10.

Once the tracking module 44 has received responses from the various components, the tracking module 44 may determine any differences between the engine fingerprint 50 and the responses at block 60. Based on this determination, the tracking module 44 may determine if there are any changes to the mechanical, programming, and/or operational configurations of the components at block 62. If not, then the tracking module 44 may return to block 56 to acquire the engine fingerprint 50 at the next designated time. If there are changes, then the tracking module 44 may update the engine fingerprint 50 and transmit the updated engine fingerprint 50 to the database 46 at block 64 before returning to block 56.

FIG. 5 illustrates a process 54 that may be performed by the tracking module 44 in a scenario in which a component of the power generation system 10 has no knowledge of its assigned unique identifier (e.g., a tracking module 44 retrofitted for an existing factory certified rebuild system). Blocks 66 and 68 of the process 54 may be generally identical to blocks 56 and 58 of the process 52, respectively, in that the tracking module 44 may create and acquire the engine fingerprint 50 and query the components of the power generation system 10. However, at block 70, the tracking module 44 then determines if at least one component lacks a unique identifier 48. If so, then the tracking module 44 may assign a unique identifier 48 and transmit the unique identifier 48 to the component at block 72 before proceeding to block 74. If not, the tracking module 44 may proceed straight to block 74, in which it determines whether there are any differences between the engine fingerprint 50 and the responses, similarly to block 60. The tracking module 44 may then update the engine fingerprint 50 and transmit the updated engine fingerprint 50 to the database 46 at block 76 before returning to block 66.

One or more of the disclosed embodiments, alone or on combination, may provide one or more technical effects including improving the accuracy of information recorded about the mechanical and operational configuration of engine systems. In particular, the disclosed embodiments may periodically create and update an engine fingerprint for an engine system, wherein the engine fingerprint may encapsulate the mechanical and operational configuration of each component in the engine system. The engine fingerprints may be stored in a remote database, and may be used for a variety of tasks, such as calculating the total lifecycle hours of a component, identifying qualified systems for a fleet-based analysis, and targeting customers for upgrades. In short, the engine fingerprints may decrease the amount of time and effort needed to complete maintenance tasks and may operate with minimal user input from operators, service personnel, and/or customers. The technical effects and technical problems in the specification are exemplary and are not limiting. It should be noted that the embodiments described in the specification may have other technical effects and can solve other technical problems.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system comprising:
   an engine controller comprising a processor configured to:
      retrieve an engine fingerprint of engine components, wherein for each of the engine components the engine fingerprint includes a first identifier uniquely identifying each of the engine components;
      query a plurality of the engine components, wherein the plurality of the engine components are configured to be disposed in an engine system; and
      determine if a first engine component is a replacement component, a new component, or an originally installed component based on the engine fingerprint, the first identifier, and the query, wherein the engine controller is configured to control the engine system.
2. The system of clause 1, wherein the processor is configured to determine if the engine controller has been moved from a first engine system into a second engine system based on the engine fingerprint, the first identifier, and the query.
3. The system of any preceding clause, wherein the engine components comprise an identification module having one or more identifiers.
4. The system of any preceding clause, wherein the processor is configured to update the engine fingerprint to derive a second engine fingerprint based on a determination that at least one of the plurality of engine components is not on the engine fingerprint.
5. The system of any preceding clause, wherein the processor is configured to transmit the second engine fingerprint to a database.
6. The system of any preceding clause, wherein the database is configured to determine if at least one of the engine components in the second engine fingerprint is de-commissioned; and generate an operator alert if at least one of the engine components in the second engine fingerprint is de-commissioned.
7. The system of any preceding clause, wherein the database is configured to determine if at least one of the engine components in the second engine fingerprint is included in a third engine fingerprint from a second engine controller, and request an update for the third engine fingerprint from the second engine controller.
8. The system of any preceding clause, wherein the processor is configured to determine that the first engine component is the new component or the replacement component by determining that the first identifier is not included in the engine fingerprint.
9. The system of any preceding clause, wherein the engine fingerprint comprises a list.
10. The system of any preceding clause, wherein the processor is configured to create a second identifier identifying a second engine component and to include the second identifier in the engine fingerprint during an addition of the second engine component to the engine system.
11. The system of any preceding clause, comprising a reciprocating engine included in the engine system, and wherein the engine component comprises a reciprocating engine component configured to be disposed in the reciprocating engine.
12. A method, comprising:
   retrieving an engine fingerprint of engine components, wherein for each of the engine components the engine fingerprint includes a first identifier uniquely identifying each of the engine components;
   querying a plurality of the engine components, wherein the plurality of the engine components are configured to be disposed in an engine system; and
   determining if a first engine component is a replacement component, a new component, or an originally installed component based on the engine fingerprint, the first identifier, and the query.
13. The method of any preceding clause, comprising determining if the engine controller has been moved from a first engine system into a second engine system based on the engine fingerprint, the first identifier, and the query.
14. The method of any preceding clause, comprising receiving the first identifier associated with each of the engine components upon start up of the reciprocating engine system, based on a predetermined schedule, or any combination thereof.
15. The method of any preceding clause, comprising updating the engine fingerprint based on a determination that at least one of the plurality of engine components is not on the engine fingerprint; and transmitting the updated engine fingerprint to a database.
16. The method of any preceding clause, comprising updating the engine fingerprint based on a determination that at least one of the plurality of engine components is not on the engine fingerprint; and recording a timestamp of the update.
17. The method of any preceding clause, comprising updating the engine fingerprint based on a determination that at least one of plurality of engine components is not on the engine fingerprint and determining lifetime hours for each of the at least one of the plurality of engine components added to the engine fingerprint.
18. A non-transitory, computer-readable medium comprising executable code comprising instructions configured to:
   retrieve an engine fingerprint of engine components, wherein for each of the engine components the engine fingerprint includes an identifier uniquely identifying each of the engine components;
   query a plurality of the engine components, wherein the plurality of engine components are configured to be disposed in a reciprocating engine system;
   determine if a first engine component is a replacement component, a new component, or an originally installed component based on the engine fingerprint, the identifier, and the query;
   update the engine fingerprint based on the determination; and
   transmit the engine fingerprint to a database.
19. The non-transitory, computer-readable medium of any preceding clause, comprising instructions configured to control the reciprocating engine system.
20. The non-transitory, computer-readable medium of any preceding clause, comprising instructions configured to determine whether at least one of the plurality of engine components is lacking an identifier and to assign an identifier to the at least one of the plurality of engine components.

## Claims

1. A system (10) comprising:
an engine controller (20) comprising a processor (36) configured to:
retrieve (56) an engine fingerprint of engine components, wherein for each of the engine components the engine fingerprint includes a first identifier uniquely identifying each of the engine components;
query (58) a plurality of the engine components, wherein the plurality of the engine components are configured to be disposed in an engine system; and
determine (60) if a first engine component is a replacement component, a new component, or an originally installed component based on the engine fingerprint, the first identifier, and the query, wherein the engine controller is configured to control the engine system.

2. The system (10) of claim 1, wherein the processor (36) is configured to determine if the engine controller (20) has been moved from a first engine system into a second engine system based on the engine fingerprint, the first identifier, and the query.

3. The system (10) of either of claim 1 or 2, wherein the engine components comprise an identification module having one or more identifiers.

4. The system (10) of any preceding claim, wherein the processor (36) is configured to update the engine fingerprint to derive a second engine fingerprint based on a determination that at least one of the plurality of engine components is not on the engine fingerprint.

5. The system (10) of claim 4, wherein the processor (36) is configured to transmit the second engine fingerprint to a database (46).

6. The system (10) of claim 5, wherein the database (46) is configured to determine if at least one of the engine components in the second engine fingerprint is de-commissioned; and generate an operator alert if at least one of the engine components in the second engine fingerprint is de-commissioned.

7. The system (10) of either of claim 5 or 6, wherein the database (46) is configured to determine if at least one of the engine components in the second engine fingerprint is included in a third engine fingerprint from a second engine controller, and request an update for the third engine fingerprint from the second engine controller.

8. The system (10) of any preceding claim, wherein the processor (36) is configured to determine that the first engine component is the new component or the replacement component by determining that the first identifier is not included in the engine fingerprint.

9. The system (10) of any preceding claim, wherein the engine fingerprint comprises a list.

10. The system (10) of any preceding claim, wherein the processor (36) is configured to create a second identifier identifying a second engine component and to include the second identifier in the engine fingerprint during an addition of the second engine component to the engine system.

11. The system (10) of any preceding claim, comprising a reciprocating engine included in the engine system, and wherein the engine component comprises a reciprocating engine component configured to be disposed in the reciprocating engine.

12. A method (52), comprising:
retrieving (56) an engine fingerprint of engine components, wherein for each of the engine components the engine fingerprint includes a first identifier uniquely identifying each of the engine components;
querying (58) a plurality of the engine components, wherein the plurality of the engine components are configured to be disposed in an engine system; and
determining (60) if a first engine component is a replacement component, a new component, or an originally installed component based on the engine fingerprint, the first identifier, and the query.

13. The method (52) of claim 12, comprising determining if the engine controller has been moved from a first engine system into a second engine system based on the engine fingerprint, the first identifier, and the query.

14. The method (52) of either of claim 12 or 13, comprising receiving the first identifier associated with each of the engine components upon start up of the reciprocating engine system, based on a predetermined schedule, or any combination thereof.

15. The method (52) of any of claims 12 to 14, comprising updating the engine fingerprint based on a determination that at least one of the plurality of engine components is not on the engine fingerprint; and transmitting the updated engine fingerprint to a database.
